(19) **Europäisches Patentamt European Patent Office Office européen des brevets**

(11) **EP 4 170 265 B1**

(12) **EUROPEAN PATENT SPECIFICATION**

(45) Date of publication and mention of the grant of the patent:
**07.08.2024 Bulletin 2024/32**

(21) Application number: **20940660.2**

(22) Date of filing: **19.06.2020**

(51) International Patent Classification (IPC):
**F25B 43/00** *(2006.01)* **F25B 1/00** *(2006.01)*
**F24F 11/84** *(2018.01)* **F25B 41/39** *(2021.01)*
**F25B 49/02** *(2006.01)*

(52) Cooperative Patent Classification (CPC):
**F24F 11/84; F25B 1/00; F25B 41/39; F25B 49/02;**
F25B 2400/16; F25B 2600/2513; F25B 2700/1931;
F25B 2700/1933; F25B 2700/21152;
F25B 2700/21163; Y02B 30/70

(86) International application number:
**PCT/JP2020/024140**

(87) International publication number:
**WO 2021/255921 (23.12.2021 Gazette 2021/51)**

(54) **REFRIGERATION CYCLE DEVICE**

KÄLTEKREISLAUFVORRICHTUNG

DISPOSITIF À CYCLE DE RÉFRIGÉRATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.04.2023 Bulletin 2023/17**

(73) Proprietor: **MITSUBISHI ELECTRIC CORPORATION**
**Chiyoda-ku**
**Tokyo 100-8310 (JP)**

(72) Inventors:
• **MORI, Yuki**
**Tokyo 100-8310 (JP)**
• **FUJITSUKA, Masashi**
**Tokyo 100-8310 (JP)**
• **NAKAI, Takahiro**
**Tokyo 100-8310 (JP)**

(74) Representative: **Meissner Bolte Partnerschaft mbB**
**Patentanwälte Rechtsanwälte**
**Postfach 86 06 24**
**81633 München (DE)**

(56) References cited:
EP-A1- 2 068 094    EP-A1- 3 147 592
WO-A1-2017/017767    WO-A1-2019/073517
JP-A- 2008 064 436    JP-A- 2019 173 987
JP-A- 2019 173 987    US-A1- 2020 116 396

**Description**

TECHNICAL FIELD

The present invention relates to a refrigeration cycle apparatus provided with a receiver that stores liquid refrigerant.

BACKGROUND ART

Some refrigeration cycle apparatuses have a refrigerant circuit which includes an upstream expansion valve, a receiver configured to store liquid refrigerant, and a downstream expansion valve, and in which the degree of subcooling is controlled by the upstream expansion valve and the degree of suction superheat is controlled by the downstream expansion valve. Of such refrigeration cycle apparatuses, certain refrigeration cycle apparatuses include a liquid storage determination module that determines whether or not liquid refrigerant is stored in the receiver (see Patent Literature 1, for example). In the refrigeration cycle apparatus described in Patent Literature 1, in the case where it is determined that liquid refrigerant is not stored in the receiver when the degree of suction superheat of a compressor is zero, intervals at which the downstream expansion valve is controlled are shortened or a control amount thereof is increased to shorten a time period required for restoring the receiver to a state in which liquid refrigerant is stored. The document EP 2068094 A1 discloses a refrigeration cycle apparatus according to the preamble of claim 1.

CITATION LIST

PATENT LITERATURE

Patent Literature 1: Japanese Unexamined Patent Application Publication JP 2019- 148 395 A

SUMMARY OF THE INVENTION

TECHNICAL PROBLEM

However, in the air-conditioning apparatus disclosed in Patent Literature 1, a change in the amount of liquid refrigerant in the receiver in time in which the opening degree of the downstream expansion valve is changed is not considered. Consequently, in the air-conditioning apparatus of Patent Literature 1, depletion of the liquid refrigerant cannot be avoided in advance, and inevitably, a control performance is temporarily reduced.

The present invention is applied to solve the above problem, and relates to a refrigeration cycle apparatus capable of reducing an unnecessary variation of the amount of liquid refrigerant in a receiver to avoid deterioration of a control performance.

SOLUTION TO THE PROBLEM

According to the present invention the above objective is solved by a refrigeration cycle apparatus according to claim 1. A refrigeration cycle apparatus according to the present invention includes a refrigerant circuit in which a compressor configured to compress refrigerant, a condenser, a receiver configured to store the refrigerant, and an evaporator are connected by pipes. The refrigeration cycle apparatus includes: an upstream expansion valve whose opening degree is variable and which is provided between the condenser and the receiver in the refrigerant circuit; a downstream expansion valve whose opening degree is variable and which is provided between the receiver and the evaporator in the refrigerant circuit; and a controller configured to control the opening degree of the upstream expansion valve and the opening degree of the downstream expansion valve.

The controller is configured to: compute the opening degree of the downstream expansion valve and a provisional opening degree of the upstream expansion valve; compute a correction value for the opening degree of the upstream expansion valve based on at least a difference between the computed opening degree of the downstream expansion valve and an opening degree thereof that is being set; and perform a control to set the opening degree of the downstream expansion valve to the computed opening degree of the downstream expansion valve and to set the opening degree of the upstream expansion valve to an opening degree obtained by correcting the computed provisional opening degree of the upstream expansion valve by the correction value, in conjunction with the downstream expansion valve.

The correction value for the opening degree of the upstream expansion valve or a correction change amount of the opening degree of the upstream expansion valve, which is a difference between the computed correction value and a previous correction value, is a value having a same sign as the difference between the opening degrees of the downstream expansion valve.

ADVANTAGEOUS EFFECTS OF THE INVENTION

According to the present invention, when the opening degree of the downstream expansion valve is changed to the computed opening degree, the upstream expansion valve is controlled to have an opening degree corrected by a correction value computed based on the difference between the opening degree between the downstream expansion valve, and the correction value or an amount of correction change has the same sign as the difference between the opening degrees of the downstream expansion valve. Thus, when the opening degree of the downstream expansion valve is changed to the computed opening degree, the variation of the amount of the liquid refrigerant on the upstream side and the downstream side of the receiver is reduced, whereby the variation of the amount of the liquid refrigerant in the receiver is reduced.

As a result, transitional depletion of the liquid refrigerant can be avoided. Therefore, even while the opening degree of the downstream expansion valve is being changed, the amount of the refrigerant in the refrigerant circuit can be controlled using the liquid refrigerant stored in the receiver under the control of the upstream expansion valve and the downstream expansion valve, and thus deterioration of the control performance of the upstream expansion valve and the downstream expansion valve can thus be avoided.

BRIEF DESCRIPTION OF DRAWINGS

FIG. 1      is a schematic diagram illustrating an example of the configuration of a refrigeration cycle apparatus according to Embodiment 1 of the invention.

FIG. 2      is a functional block diagram illustrating functions of a controller as illustrated in FIG. 1.

FIG. 3      is a block diagram illustrating an example of the configuration of a section of the controller as illustrated in FIG. 1 that controls an upstream expansion valve and a downstream expansion valve.

FIG. 4      is a block diagram illustrating an example of the configuration of an opening-degree correction device as illustrated in FIG. 3.

FIG. 5      is a block diagram illustrating a first modification of the section of the controller as illustrated in FIG. 3.

FIG. 6      is a block diagram illustrating the configuration of the opening-degree correction device as illustrated in FIG. 5.

FIG. 7      is a schematic diagram illustrating a second modification of the refrigeration cycle apparatus as illustrated in FIG. 1.

FIG. 8      is a schematic diagram illustrating a third modification of the refrigeration cycle apparatus as illustrated in FIG. 1.

FIG. 9      is a diagram for explanation of an advantage of Embodiment 1.

FIG. 10     is a block diagram illustrating an example of the configuration of an opening-degree correction device according to Embodiment 2.

FIG. 11     is a block diagram illustrating an example of the configuration of an opening-degree correction device according to Embodiment 3.

FIG. 12     is a diagram indicating an operation of the downstream expansion valve in simulation performed regarding the refrigeration cycle apparatus of Embodiment 1 or 2.

FIG. 13     is a diagram indicating an operation of the upstream expansion valve in simulation performed regarding the refrigeration cycle apparatus of Embodiment 1 or 2.

FIG. 14     is a diagram indicating a change in a refrigerant flow rate in simulation performed regarding the refrigeration cycle apparatus of Embodiment 1 or 2.

FIG. 15     is a diagram indicating a change in the volume of refrigerant in the receiver in simulation performed regarding the refrigeration cycle apparatus of Embodiment 1 or 2.

DESCRIPTION OF EMBODIMENTS

A refrigeration cycle apparatus 1 according to each of embodiments of the present invention will be described with reference to the drawings. In each of refigures that will be referred to below, components that are the same as or equivalent to those in a previous figure or previous figures are denoted by the same reference signs, and the same is true of the entire text of the specification.

Embodiment 1

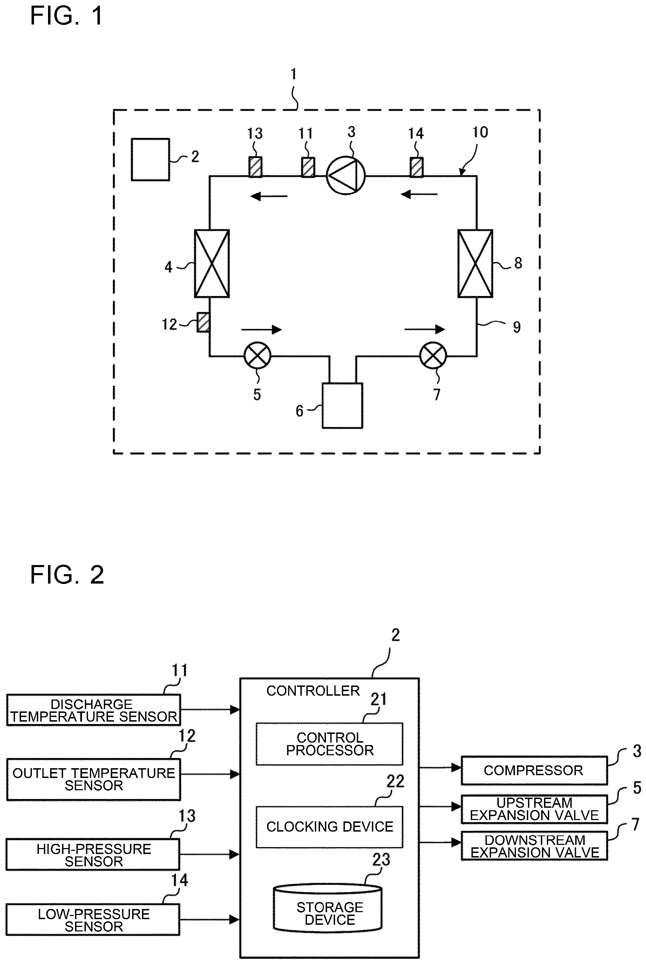

FIG. 1 is a schematic diagram illustrating an example of the configuration of a refrigeration cycle apparatus 1 according to Embodiment 1. As illustrated in FIG. 1, the refrigeration cycle apparatus 1 includes a controller 2, a compressor 3, a condenser 4, an upstream expansion valve 5, a receiver 6, a downstream expansion valve 7, and an evaporator 8. The compressor 3, the condenser 4, the upstream expansion valve 5, the receiver 6, the downstream expansion valve 7, and the evaporator 8 are connected by pipes 9, whereby a refrigerant circuit 10 is formed. In the refrigerant circuit 10, refrigerant flows. Solid arrows in FIG. 1 indicate flow directions of the refrigerant. The following description is made by referring to by way of example the case where the refrigeration cycle apparatus 1 is an air-conditioning apparatus, but the refrigeration cycle apparatus 1 is not limited to the air-conditioning apparatus.

The compressor 3 compresses and discharges sucked refrigerant. The compressor 3 may be, for example, a compressor whose capacity (amount of refrigerant to be fed per unit time) is changed when the driving frequency is arbitrarily changed by an inverter circuit (not illustrated). The condenser 4 is provided on the discharge side of the compressor 3. The condenser 4 causes heat exchange to be performed between the refrigerant and air, thereby condensing the refrigerant to liquefy the refrigerant and heat the air. The upstream expansion valve 5 is provided at the pipe 9 between the condenser 4 and the receiver 6 in the refrigerant circuit 10. The upstream expansion valve 5 is an expansion valve whose opening degree can be changed, such as an electronic expansion valve, and adjusts the pressure and the flow rate of the refrigerant. The receiver 6 is a refrigerant container that stores the refrigerant. The receiver 6 is provided at the pipe 9 between the condenser 4 and the evaporator 8, and stores liquid refrigerant that is left as surplus refrigerant during operation. That is, the receiver 6 is configured to store liquid refrigerant that flows out of the condenser 4. The downstream expansion valve 7 is provided at the pipe 9 between the receiver 6 and the evaporator 8 in the refrigerant circuit 10. The downstream expansion valve 7 is an expansion valve whose opening degree can be changed, such as an electronic expansion valve, and adjusts the pressure and the flow rate of the refrigerant. The evaporator 8 is provided at the pipe 9 on the suction side of the compressor 3. The evaporator 8 causes heat exchange between the refrigerant and air, thereby evaporating and gasifying the refrigerant and cool the air.

That is, the receiver 6 is provided at the pipe 9 between the upstream expansion valve 5 and the downstream expansion valve 7, and has a configuration in which the amount of liquid refrigerant which returns from the receiver 6 to the pipe 9 and the amount of liquid refrigerant which flows from the pipe 9 into the receiver 6 and stays in the receiver 6 are changed depending on the opening degree of the upstream expansion valve 5 and that of the downstream expansion valve 7.

In addition, the refrigeration cycle apparatus 1 includes, for example, a discharge temperature sensor 11, an outlet temperature sensor 12, a high-pressure sensor 13, a low-pressure sensor 14, etc. The discharge temperature sensor 11 and the high-pressure sensor 13 are arranged at the pipe 9 on the discharge side of the compressor 3. The discharge temperature sensor 11 detects the temperature of refrigerant discharged from the compressor 3. The high-pressure sensor 13 detects the pressure of the refrigerant discharged from the compressor 3. The outlet temperature sensor 12 is provided at a refrigerant outlet of the condenser 4, and detects the temperature of refrigerant that flows out from the condenser 4. The low-pressure sensor 14 is provided at the pipe 9 on the suction side of the compressor 3, and detects the pressure of refrigerant to be sucked into the compressor 3.

FIG. 2 is a functional block diagram illustrating functions of the controller as illustrated in FIG. 1. As illustrated in FIG. 2, such various sensors as described above are connected to the controller 2, and data on temperature or pressure from each of the sensors is input to the controller 2. In addition, for example, an instruction from a user is input to the controller 2 through an operation unit (not illustrated).

As illustrated in FIG. 2, the controller 2 includes a control processor 21, a storage device 23, and a clocking device 22. The control processor 21 performs processing, such as computation and determination, based on the input data, such as temperature, to control components of the refrigeration cycle apparatus 1, such as the compressor 3, the upstream expansion valve 5, and the downstream expansion valve 7. The storage device 23 stores data required for the processing by the control processor 21. The storage device 23 includes a volatile storage device (not illustrated), such as a random access memory (RAM), which is capable of temporarily storing data, a hard disk, and a non-volatile auxiliary storage device (not illustrated), such as a flash memory, which is capable of storing data for a long period of time. The clocking device 22 is, for example, a timer, and measures time. The clocking device 22 is used, for example, in determination or other processing by the control processor 21.

The control processor 21 may be, for example, a microcomputer having a control arithmetic processing device, such as a central processing unit (CPU). The storage device 23 stores data in which a procedure of processing by the control processor 21 is written as a program. The control arithmetic processing device executes processing based on the data of the program to achieve control. It should be noted that each of those devices may be formed as a dedicated device (hardware).

The controller 2 is configured such that when the opening degree of the downstream expansion valve 7 is changed to a computed opening degree, the controller 2 corrects a computed opening degree of the upstream expansion valve 5 on the basis of the opening degree of the downstream expansion valve 7. In addition, the controller 2 is configured such that when the opening degree of the downstream expansion valve 7 is changed to the computed opening degree, the controller 2 controls the opening degree of the upstream expansion valve 5 to change it to the corrected opening degree in conjunction with the downstream expansion valve 7.

With reference to FIG. 1, an operation of the refrigeration cycle apparatus 1 will be described. The refrigerant is compressed by the compressor 3 to change into a high-temperature and high-pressure gas refrigerant. The high-temperature and high-pressure gas refrigerant is then discharged from a discharge outlet of the compressor 3 and flows into the condenser 4. The gas refrigerant that has flowed into the condenser 4 transfers heat and is liquefied under high pressure in the condenser 4, and then flows out of the condenser 4. The refrigerant that has flowed out of the condenser 4 is decompressed by the upstream expansion valve 5 to change into middle-temperature two-phase refrigerant. The refrigerant then flows into the receiver 6. In the receiver 6, the two-phase refrigerant is separated into gas refrigerant and liquid refrigerant. The liquid refrigerant is discharged from the receiver 6. The refrigerant discharged from the receiver 6 is decompressed by the downstream expansion valve 7 to change into low-temperature two-phase refrigerant. The low-temperature two-phase refrigerant then flows into the evaporator 8. The low-temperature two-phase refrigerant that has flowed into the evaporator 8 receives heat and is gasified under low pressure in the evaporator 8, and then flows out of the evaporator 8. The refrigerant that has flowed out of the evaporator 8 is sucked into the compressor 3 and re-compressed thereby. Such operations are repeated, whereby a refrigeration cycle of the refrigeration cycle apparatus 1 is achieved.

It should be noted that the refrigerant circuit 10 as illustrated in FIG. 1 has a minimum configuration required for achieving the refrigeration cycle according to the present invention. The refrigerant circuit 10 may include, as occasion arises, a four-way valve that switches the flow passage for the refrigerant between a plurality of flow passages and an accumulator that controls suction of the liquid refrigerant into the compressor 3.

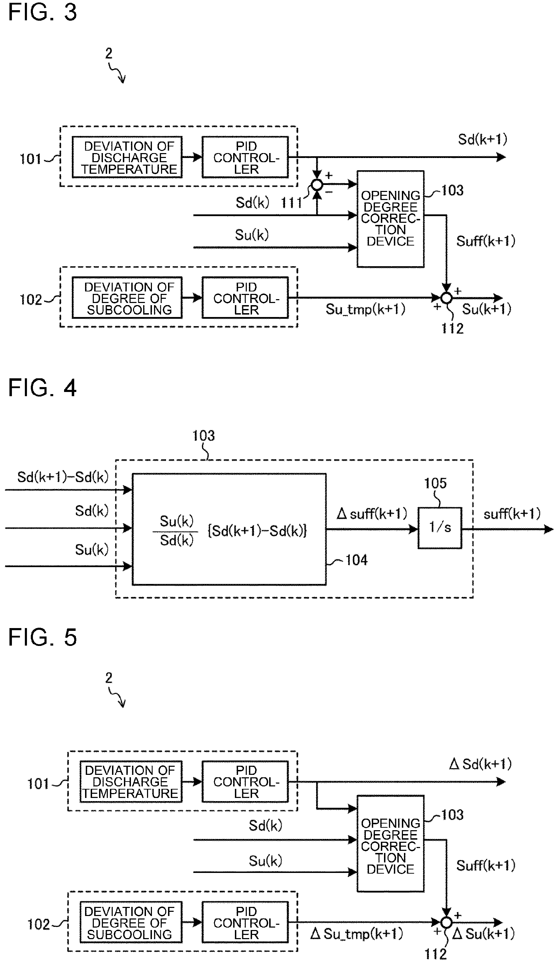

FIG. 3 is a block diagram illustrating an example of the configuration of a section of the controller as illustrated in FIG. 1 that controls the upstream expansion valve and the downstream expansion valve. In FIG. 3, k is the number of steps in repeated computation. FIG. 3 indicates the case where an opening degree $Su(k+1)$ of the upstream expansion valve 5 and an opening degree $Sd(k+1)$ of the downstream expansion valve 7 in step $k+1$ are computed. As illustrated in FIG. 3, the controller 2 includes a first controller 101, a second controller 102, an opening-degree correction device 103, etc. In addition, in the example illustrated in FIG. 3, the controller 2 includes a subtractor 111 that performs subtraction and an adder 112 that performs addition.

In this case, an opening degree $Sd(k)$ of the downstream expansion valve 7 in step k is an opening degree set in the downstream expansion valve 7, and may be a value computed by the controller 2 or an actual opening degree of the downstream expansion valve 7. Similarly, an opening degree $Su(k)$ of the upstream expansion valve 5 in step k is an opening degree set in the upstream expansion valve 5, and may be a value computed by the controller 2 or an actual opening degree of the upstream expansion valve 5. In the following description, the opening degree $Sd(k)$ of the downstream expansion valve 7 in step k may be sometimes referred to as a set value of the downstream expansion valve 7 in the case where the opening degree $Sd(k+1)$ of the downstream expansion valve 7 in step $k+1$ is computed. In addition, the opening degree $Su(k)$ of the upstream expansion valve 5 in step k may be sometimes referred to as a set value of the upstream expansion valve 5 in the case where the opening degree $Su(k+1)$ of the upstream expansion valve 5 in step $k+1$ is computed.

The first controller 101 is a position-type proportional-integral-differential (PID) controller that outputs an opening degree (control operation value) of the downstream expansion valve 7 which causes a discharge temperature (first control value) to follow a target discharge temperature (first target control value). The PID controller is a controller that includes a proportional controller, an integral controller, and a differential controller. To the PID controller of the first controller 101, a deviation of a discharge temperature obtained from the discharge temperature sensor 11 from the target discharge temperature set in advance is input. The PID controller of the first controller 101 obtains the opening degree $Su(k+1)$ of the upstream expansion valve 5 by performing a predetermined computation with the input data, and outputs the opening degree $Su(k+1)$. The contents of the computation will be specifically described later.

The second controller 102 is a position-type PID controller that outputs a provisional opening degree (control operation value) of the upstream expansion valve 5 which causes the degree of subcooling (second control value) to follow a target degree of subcooling (second target control value). To the PID controller of the second controller 102, a deviation of the degree of subcooling from the target degree of subcooling is input. The PID controller of the second controller 102 obtains a provisional opening degree $Su\_tmp(k+1)$ of the upstream expansion valve 5 by performing a predetermined computation with the input data, and outputs the provisional opening degree $Su\_tmp(k+1)$. The contents of the computation will be specifically described later.

It should be noted that the degree of subcooling can be computed based on inputs from the high-pressure sensor 13 and the outlet temperature sensor 12. More specifically, first, a condensation temperature is computed from a high pressure obtained from the high-pressure sensor 13, using a conversion formula that uses a physical property value of the refrigerant. Then, the degree of subcooling is computed by determining a difference between the computed condensation temperature and the temperature of the refrigerant at the outlet of the condenser 4 which is obtained from the outlet temperature sensor 12.

It is not indispensable that the combination of the first control value which is controlled by the first controller 101 and the second control value which is controlled by the second controller 102 is a combination of the discharge temperature and the degree of subcooling. For example, the combination of the first control value and the second control value may be a combination of values that are selected from a discharge temperature, a discharge pressure, a suction temperature, a suction pressure, an evaporation temperature, a low pressure, a condensation temperature, a high pressure, an indoor-unit suction temperature, the degree of suction superheat, the degree of discharge superheat, the degree of subcooling, etc.

Although it is described above that the first controller 101 and the second controller 102 are PID controllers, it is not limiting. For example, the first controller 101 and the second controller 102 may be each a P controller (proportional controller) or a PI controller (proportional-integral controller). Alternatively, the first controller 101 and the second controller 102 may be each a dynamic feedback controller, such as a model predictive controller, or a dynamic or static controller that performs control according to, for example, a predetermined table. In addition, the first controller 101 and the second controller 102 may be each configured to output a constant.

The subtractor 111 is provided between the first controller 101 and the opening-degree correction device 103. The opening degree $Sd(k+1)$ of the downstream expansion valve 7 in step $k+1$ which is computed by the first controller 101 and the opening degree $Sd(k)$ of the downstream expansion valve 7 in step $k$ are input to the subtractor 111. The subtractor 111 subtracts the opening degree $Sd(k)$ of the downstream expansion valve 7 in step $k$ from the opening degree $Sd(k+1)$ of the downstream expansion valve 7 in step $k+1$ to determine a change amount of the opening degree of the downstream expansion valve 7, that is, the difference between the opening degrees thereof, and outputs the difference. The contents of computation will be specifically described later.

In this case, the opening degree $Sd(k)$ of the downstream expansion valve 7 in step $k$ is the opening degree set in the downstream expansion valve 7, and may be, for example, a value computed by the controller 2 or an actual opening degree of the downstream expansion valve 7. Similarly, the opening degree $Su(k)$ of the upstream expansion valve 5 in step $k$ is the opening degree set in the upstream expansion valve 5, and may be, for example, a value computed by the controller 2 or an actual opening degree of the upstream expansion valve 5. In the following description, the opening degree $Sd(k)$ of the downstream expansion valve 7 in step $k$ may be sometimes referred to as a set value or an opening degree which is being set in the downstream expansion valve 7 in the case where the opening degree $Sd(k+1)$ of the downstream expansion valve 7 in step $k+1$ is computed.

The opening degree $Sd(k)$ of the downstream expansion valve 7 in step $k$ and the opening degree $Su(k)$ of the upstream expansion valve 5 in step $k$ are input to the opening-degree correction device 103. The change amount of the opening degree of the downstream expansion valve 7 is also input from the subtractor 111 to the opening-degree correction device 103. The opening-degree correction device 103 obtains a correction value $Suff(k+1)$ for the opening degree of the upstream expansion valve 5 by performing a computation based on the input opening degree $Sd(k)$ of the downstream expansion valve 7, the input opening degree $Su(k)$ of the upstream expansion valve 5, and the input change amount of the opening degree of the downstream expansion valve 7, and outputs the correction value $Suff(k+1)$. That is, in the opening-degree correction device 103, the correction value $Suff(k+1)$ of the opening degree of the upstream expansion valve 5 which accords to the opening degree of the downstream expansion valve 7 is computed.

The correction value $Suff(k+1)$ for the opening degree of the upstream expansion valve 5 which is computed by the opening-degree correction device 103 and the provisional opening degree $Su\_tmp(k+1)$ of the upstream expansion valve 5 which is computed by the second controller 102 are input to the adder 112. The adder 112 adds the correction value $Suff(k+1)$ to the provisional opening degree $Su\_tmp(k+1)$ of the upstream expansion valve 5 to determine the opening degree $Su(k+1)$ of the upstream expansion valve 5, and outputs the opening degree $Su(k+1)$.

FIG. 4 is a block diagram illustrating an example of the configuration of the opening-degree correction device as illustrated in FIG. 3. As illustrated in FIG. 4, the opening-degree correction device 103 includes a refrigerant-amount retention module 104 and an integrator 105. According to the following formula, the refrigerant-amount retention module 104 computes a correction change amount $\Delta Suff(k+1)$ of the opening degree of the upstream expansion valve 5 based on the following: the opening degree $Sd(k)$ of the downstream expansion valve 7, that is, the set value thereof; the change amount of the opening degree of the downstream expansion valve 7; and the opening degree $Su(k)$ of the upstream expansion valve 5, that is, the set value thereof. The correction change amount $\Delta Suff(k+1)$ is the difference between the computed correction value, that is, the correction value of step $k+1$, and the previous correction value, that is, the correction value of step $k$.

Math. 1

$$\Delta Suff(k + 1) = \frac{Su(k)}{Sd(k)}\{Sd(k + 1) - Sd(k)\}$$

...(Formula 1)

As can be seen from Formula 1, the correction change amount $\Delta Suff(k+1)$ is output as a value having the same sign as the change amount of the opening degree of the downstream expansion valve 7. More specifically, when the change amount of the opening degree of the downstream expansion valve 7 is a positive value, that is, when the opening degree of the downstream expansion valve 7 is increased, the correction value to be added to the computed opening degree of the upstream expansion valve 5 is greater than the correction value added in the previous step. In addition, when the change amount of the opening degree of the downstream expansion valve 7 is a negative value, that is, when the opening degree of the downstream expansion valve 7 is decreased, the correction value to be added to the computed opening degree of the upstream expansion valve 5 is smaller than the correction value added in the previous step.

Furthermore, as can be seen from Formula 1, the correction change amount $\Delta Suff(k+1)$ of the opening degree of the upstream expansion valve 5 has a proportional relationship with the opening degree $Su(k)$ of the upstream expansion valve 5, that is, the set value thereof. Thus, the absolute value of the correction change amount $\Delta Suff(k+1)$ tends to increase as the opening degree of the upstream expansion valve 5 increases. In addition, the correction change amount $\Delta Suff(k+1)$ has an inversely proportional relationship with the opening degree $Sd(k)$ of the downstream expansion valve 7, that is, the set value thereof. Thus, the absolute value of the correction change amount $\Delta Suff(k+1)$ tends to decrease as the opening degree of the downstream expansion valve 7 increases.

It should be noted that Formula 1 is an example of a formula that gives the above characteristic and tendency to the correction change amount $\Delta Suff(k+1)$, and when a formula for achieving part or the entirety of an operation corresponding to the above characteristic and tendency is applied, it is not indispensable that the correction change amount $\Delta Suff(k+1)$ is computed according to Formula 1.

The integrator 105 computes the correction value $Suff(k+1)$ from the correction change amount $\Delta Suff(k+1)$ of the opening degree of the upstream expansion valve 5, according to the following formula. That is, the integrator 105 integrates the correction change amount to compute the correction value $Suff(k+1)$ for the opening degree of the upstream expansion valve 5.

Math. 2

$$Suff(k + 1) = \sum_{l=0}^{k+1} \Delta Suff(l)$$

...(Formula 2)

As described above, because the correction change amount $\Delta Suff(k+1)$ of the opening degree of the upstream expansion valve 5 is output as a value having the same sign as the change amount of the opening degree of the downstream expansion valve 7, it can be seen from Formula 2 that a change amount of the correction value $Suff(k+1)$ of the opening degree of the upstream expansion valve 5 is also a value having the same sign as the change amount of the opening degree of the downstream expansion valve 7.

First Modification

FIG. 5 is a block diagram illustrating a first modification of the section of the controller as illustrated in FIG. 3. In the first modification, each of the first controller 101 and the second controller 102 is formed as a speed-type controller that computes a change amount of the opening degree of an associated expansion valve. In addition, in the first modification, the subtractor 111 provided between the first controller 101 and the opening-degree correction device 103 in the controller 2 as illustrated in FIG. 3 is not provided. In the controller 2 of the first modification, the output of the first controller 101 is directly input to the opening-degree correction device 103.

With reference to FIG. 5, an operation algorithm of the controller in the case of using a speed-type controller will be described. As illustrated in FIG. 5, the first controller 101 computes a change amount $\Delta Sd(k+1)$ of the opening degree of the downstream expansion valve 7 from an input deviation of discharge temperature, and outputs the change amount $\Delta Sd(k+1)$. The second controller 102 computes a provisional change amount $\Delta Su\_tmp(k+1)$ of the opening degree of the upstream expansion valve 5 from an input degree of subcooling, and outputs the provisional change amount.

The opening degree $Sd(k)$ of the downstream expansion valve 7 in step k, the opening degree $Su(k)$ of the upstream expansion valve 5 in step k, and the change amount $\Delta Sd(k+1)$ of the opening degree of the downstream expansion valve 7 in step k+1 which is computed by the first controller 101 are input to the opening-degree correction device 103. The opening-degree correction device 103 computes a correction value Suff(k+1) of the opening degree of the upstream expansion valve 5 based on the opening degree Sd(k) of the downstream expansion valve 7, that is, the set value thereof, the opening degree Su(k) of the upstream expansion valve 5, that is, the set value thereof, and the change amount ΔSd(k+1) of the opening degree of the downstream expansion valve 7, and the opening-degree correction device 103 then outputs the correction value Suff(k+1). The adder 112 adds the correction value Suff(k+1) output from the opening-degree correction device 103 to the provisional opening degree Su_tmp(k+1) of the upstream expansion valve 5 which is output from the second controller 102 to obtain the opening degree Su(k+1) of the upstream expansion valve 5 in step k+1, and outputs the opening degree Su(k+1).

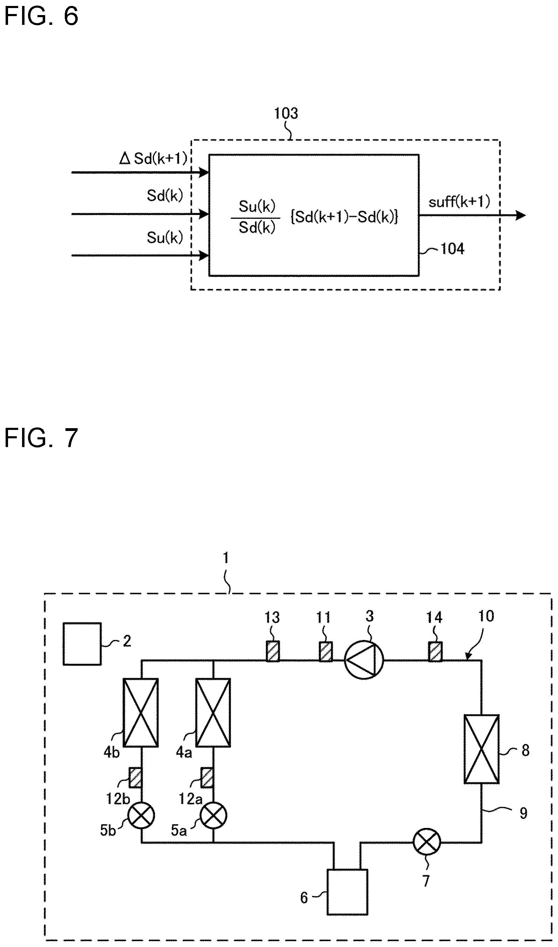

FIG. 6 is a block diagram illustrating a configuration of the opening-degree correction device as illustrated in FIG. 5. As illustrated in FIG. 6, the opening-degree correction device 103 of the first modification includes the refrigerant-amount retention module 104 but does not include the integrator 105 as illustrated in FIG. 4. According to the following formula, the refrigerant-amount retention module 104 computes a correction value Suff(k+1) for the opening degree of the upstream expansion valve 5 based on the opening degree Sd(k) of the downstream expansion valve 7, the change amount ΔSd(k+1) of the opening degree of the downstream expansion valve 7, and the opening degree Su(k) of the upstream expansion valve 5.

Math. 3

$$Suff(k+1) = \frac{Su(k)}{Sd(k)}\{Sd(k+1) - Sd(k)\} \qquad ...(\text{Formula } 3)$$

In the first modification as illustrated in FIG. 6, because the correction value Suff(k+1) is output from the opening-degree correction device 103 without being integrated, the correction value Suff(k+1) for the opening degree of the upstream expansion valve 5 is a value having the same sign as the change amount ΔSd(k+1) of the opening degree of the downstream expansion valve 7.

It should be noted that the refrigeration cycle apparatus 1 may be configured such that a plurality of heat exchangers are connected in parallel in the refrigerant circuit 10.

Second Modification

FIG. 7 is a schematic diagram illustrating a second modification of the refrigeration cycle apparatus as illustrated in FIG. 1. In the refrigerant circuit 10 of the second modification, two condensers 4a, 4b are connected in parallel. In addition, an upstream expansion valve 5a is provided at the pipe 9 on which the condenser 4a is provided, and an upstream expansion valve 5b is provided at the pipe 9 on which the condenser 4b is provided. It should be noted that although FIG. 7 illustrates the case where two condensers are provided, three or more condensers may be provided in the refrigerant circuit 10.

Even when a plurality of condensers are present as illustrated in FIG. 7, a correction change amount can be computed for each of the upstream expansion valves 5a and 5b using a similar formula to Formula 1. Where Su_a is the opening degree of the upstream expansion valve 5a associated with the condenser 4a, ΔSuff_a(k+1) is the correction change amount thereof, Su_b is the opening degree of the upstream expansion valve 5b associated with the condenser 4b, and ΔSuff_b(k+1) is the correction change amount thereof, each of the correction change amounts can be computed by the following Formula 4 or 5.

Math. 4

$$\Delta Suff\_a(k+1) = \frac{Su\_a(k)}{Sd(k)}\{Sd(k+1) - Sd(k)\} \qquad ...(\text{Formula } 4)$$

Math. 5

$$\Delta Suff\_b(k+1) = \frac{Su\_b(k)}{Sd(k)}\{Sd(k+1) - Sd(k)\} \qquad ...(\text{Formula } 5)$$

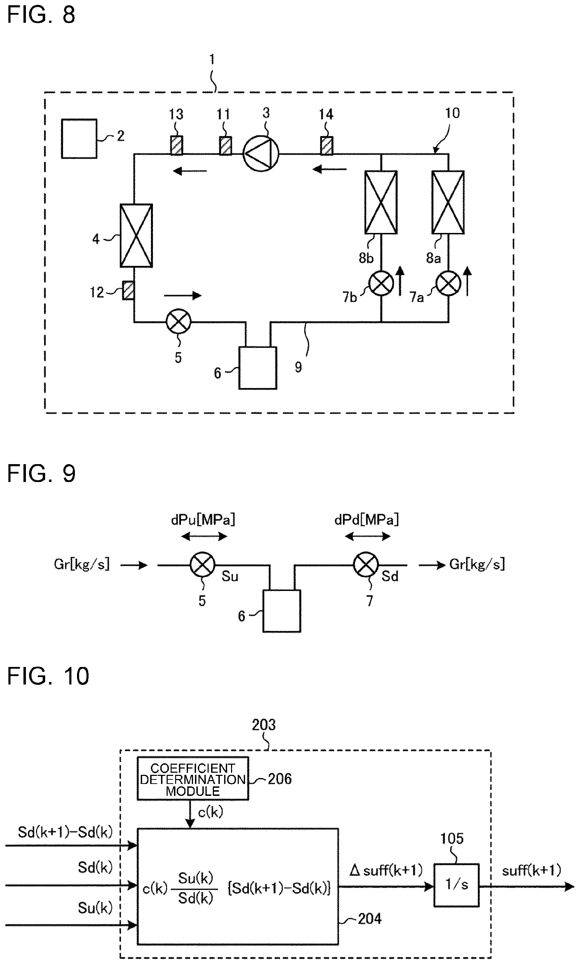

FIG. 8 is a schematic diagram illustrating a third modification of the refrigeration cycle apparatus as illustrated in FIG. 1. In the refrigerant circuit 10 of the third modification, two evaporators 8a and 8b are connected in parallel. In addition, a downstream expansion valve 7a is provided at the pipe 9 on which the evaporator 8a is provided, and a downstream expansion valve 7b is provided at the pipe 9 on which the evaporator 8b is provided. It should be noted that although FIG. 8 illustrates the case where two evaporators are provided, three or more evaporators may be provided in the refrigerant circuit 10.

Even in the case where a plurality of evaporators are provided as illustrated in FIG. 8, a correction change amount ΔSuff_b(k+1) of the opening degree of the upstream expansion valve 5 can be computed according to a similar formula to Formula 1. Where Sd_a is the opening degree of the downstream expansion valve 7a associated with the evaporator 8a, and Sd_b is the opening degree of the downstream expansion valve 7b associated with the evaporator 8b, the correction change amount ΔSuff(k+1) of the opening degree of the upstream expansion valve 5 can be computed according to the following Formula 6.

Math. 6

$$\Delta Suff(k+1) = \frac{Su(k)}{Sd\_a(k) + Sd\_b(k)} \{Sd\_a(k+1) + Sd\_b(k+1) - Sd\_a(k) - Sd\_b(k)\}$$

$$...(\text{Formula } 6)$$

As described above, the refrigeration cycle apparatus 1 of Embodiment 1 includes the refrigerant circuit 10 in which the compressor 3 configured to compress the refrigerant, the condenser 4, the receiver 6 configured to store the refrigerant, and the evaporator 8 are connected by the pipes 9. Furthermore, the refrigeration cycle apparatus 1 includes the upstream expansion valve 5 the opening degree of which can be changed and which is provided between the condenser 4 and the receiver 6 in the refrigerant circuit 10, the downstream expansion valve 7 the opening degree of which can be changed and which is provided between the receiver 6 and the evaporator 8 in the refrigerant circuit 10, and the controller 2. The controller 2 computes the opening degree of the downstream expansion valve 7 and the provisional opening degree of the upstream expansion valve 5, and compute the correction value for the opening degree of the downstream expansion valve 7 based on at least the difference between the computed opening degree of the downstream expansion valve 7 and an opening degree of the downstream expansion valve 7 that is being set. Furthermore, the controller 2 performs a control to set the opening degree of the downstream expansion valve 7 to the computed opening degree of the downstream expansion valve 7, and performs a control to set the opening degree of the upstream expansion valve 5 to an opening degree obtained by correcting the computed provisional opening degree of the upstream expansion valve 5 using the correction value, in conjunction with the downstream expansion valve 7. The correction value for the opening degree of the upstream expansion valve 5 or a correction change amount by which the opening degree of the upstream expansion valve 5 is corrected and changed from the previous opening degree of the upstream expansion valve 5 has the same sign as the difference between the opening degrees of the downstream expansion valve 7.

Thus, when the opening degree of the downstream expansion valve 7 is changed to the computed opening degree, the variation of the flow rate of the refrigerant on each of an upstream side and a downstream side of the receiver 6 is reduced, and the variation of the amount of the liquid refrigerant in the receiver 6 is thus reduced. As a result, transitional depletion of the liquid refrigerant can be avoided. Therefore, while the opening degree of the downstream expansion valve 7 is being changed, the amount of the refrigerant in the refrigerant circuit 10 can be controlled using the liquid refrigerant stored in the receiver 6 by control of the upstream expansion valve 5 and the downstream expansion valve 7, and thus deterioration of the control performance of the upstream expansion valve 5 and the downstream expansion valve 7 can be avoided.

Furthermore, the controller includes the first controller 101, the second controller 102, and the opening-degree correction device 103. By handling the opening degree of the downstream expansion valve 7 as the control operation value and changing the opening degree, the first controller 101 performs a control to cause the first control value to reach the first target control value. By handling the opening degree of the upstream expansion valve 5 as the control operation value and changing the opening degree, the second controller 102 performs a control to cause the second control value, which is different from the first control value, to reach the second target control value. The opening-degree correction device 103 computes a correction value for the opening degree of the upstream expansion valve 5 based on at least a change amount of the opening degree of the downstream expansion valve 7. In addition, the controller 2 computes a corrected opening degree of the upstream expansion valve 5 by adding the control operation value for use in the control by the second controller 102 and the correction value computed by the opening-degree correction device 103.

Thus, as each of the first controller 101 and the second controller 102, a single-input single-output controller can be used, and an algorithm for each of these controllers can be simplified. Therefore, the above control of each of the upstream expansion valve 5 and the downstream expansion valve 7 can be achieved by a device that is made at a low cost and can perform a computation under a low load. Furthermore, the first controller 101 and the second controller 102 can be configured independent of each other. A control design can be carried out for each of the controllers, and a control system can be thus flexibly designed for non-linearity and a disturbance specific to the refrigeration cycle. That is, an intuitive control system having a high readability and scalability can be provided.

Moreover, the refrigeration cycle apparatus 1 includes the discharge temperature sensor 11 which detects the temperature of the refrigerant discharged from the compressor 3, the high-pressure sensor 13 which detects the pressure of the refrigerant discharged from the compressor 3, and the outlet temperature sensor 12 which detects the temperature of the refrigerant that flows out of the condenser 4. The controller 2 computes the opening degree of the downstream expansion valve 7 based on the temperature of the refrigerant detected by the discharge temperature sensor 11. The controller 2 computes the provisional opening degree of the upstream expansion valve 5 based on the degree of the sub-cooling which is determined from the pressure of the refrigerant which is detected by the high-pressure sensor 13 and the temperature of the refrigerant which is detected by the outlet temperature sensor 12. Thus, the provisional opening degree of the upstream expansion valve 5 which is computed based on the degree of the subcooling is corrected by the correction value which depends on the opening degree of the downstream expansion valve 7 which is computed based on the discharge temperature. As a result, deterioration of the control performance which would be caused by depletion of the refrigerant can be avoided even when the degree of subcooling and the discharge temperature are controlled.

Advantage

FIG. 9 is a diagram for explanation of an advantage of Embodiment 1.
In the refrigeration cycle apparatus 1 of Embodiment 1, in consideration of continuous change in the amount of the liquid refrigerant in the receiver 6, an operation to avoid depletion of the liquid refrigerant in advance is performed, and the unnecessary variation of the amount of the liquid refrigerant in the receiver 6 can thus be reduced.

With reference to FIG. 9, how the above advantage can be obtained will be described. As illustrated in FIG. 9, in a steady state, flow rates Gr [kg/s] of the refrigerant that flows in the refrigerant circuit 10 at different points are nearly equal to each other. Regarding the refrigerant flow rate Gr [kg/s], by using the opening degrees (Su, Sd) of the expansion valves, pressure losses (dPu [MPa], dPd [MPa]) of the expansion valves and a constant $\alpha$ satisfy an approximate relationship expressed by Formula 7.

Math. 7

$$Gr = \alpha \times Su \times \sqrt{dPu} = \alpha \times Sd \times \sqrt{dPd} \quad \text{...(Formula 7)}$$

When the opening degree of the downstream expansion valve 7 changes from Sd to Sd+$\Delta$Sd and the opening degree of the upstream expansion valve 5 changes from Su to Su+$\Delta$Su, the following Formulas 8 and 9 are established on the assumption that no change is made in pressure loss.

Math. 8

$$\Delta Gr = \alpha \times \Delta Sd \times \sqrt{dPd} \quad \text{...(Formula 8)}$$

Math. 9

$$\Delta Gr = \alpha \times \Delta Su \times \sqrt{dPu} \quad \text{...(Formula 9)}$$

Furthermore, from Formulas 8 and 9, the following relationship is established.

Math. 10

$$\Delta Su = \frac{Su}{Sd} \Delta Sd \quad \text{...(Formula 10)}$$

That is, when the opening degree of the downstream expansion valve 7 is changed by ΔSd, by correcting the change amount of the opening degree of the upstream expansion valve 5 according to Formula 10, the variations of the refrigerant flow rates Gr on the downstream side and the upstream side of the receiver 6 are equalized to each other. As a result, the amount of refrigerant in the receiver 6 is kept substantially constant continuously and transiently. Thus, an unnecessary variation of the amount of the liquid refrigerant can be reduced. It is therefore possible to prevent deterioration of the control performance of the upstream expansion valve 5 and the downstream expansion valve 7, and thus promptly cause the refrigeration cycle circuit to be in a highly efficient operation state.

Embodiment 2

FIG. 10 is a block diagram illustrating an example of the configuration of an opening-degree correction device according to Embodiment 2. An opening-degree correction device 203 of Embodiment 2 further includes a coefficient determination module 206, and the coefficient determination module 206 outputs a coefficient c(k) to a refrigerant-amount retention module 204 and the coefficient c(k) is multiplied in the computation by the refrigerant-amount retention module 204. In this regard, the opening-degree correction device 203 of Embodiment 2 is different from the opening-degree correction device 103 of Embodiment 1 as illustrated in FIG. 4. The other configurations and operations are the same as those of Embodiment 1, and their descriptions will thus be omitted.

The refrigerant-amount retention module 204 of Embodiment 2 computes a correction change amount ΔSuff(k+1) according to the following Formula 11.

Math. 11

$$\Delta Suff(k+1) = c(k)\frac{Su(k)}{Sd(k)}\{Sd(k+1) - Sd(k)\} \qquad ...(\text{Formula } 11)$$

An example of the method of setting the coefficient c(k) that the coefficient determination module 206 outputs will be described. Regarding Embodiment 1, it is described above that the change amount of the flow rate Gr[kg/s] of refrigerant that flows in the refrigerant circuit 10 in a steady state, that is, the flow rate change amount ΔGr of the above refrigerant, is expressed by Formulas 8 and 9 on the assumption that no change is made in pressure loss. It is appropriate that the coefficient c(k) is determined such that an error caused by the above assumption is corrected.

When the pressure losses at the upstream expansion valve 5 and the downstream expansion valve 7 change by ΔdPu and ΔdPd, respectively, because of changes in the opening degrees, the flow rate change amount ΔGr of the upstream expansion valve 5 can be expressed by Formula 12 below, by grouping terms of second and higher orders, using Taylor expansion, to obtain O(Δ2).

Math. 12

$$\Delta Gr = \alpha \times \Delta Su \times \sqrt{dPu} \times \left(1 + \frac{1}{2}\frac{Su}{dPu}\frac{\Delta dPu}{\Delta Su} + O(\Delta^2)\right)$$

$$...(\text{Formula } 12)$$

It should be noted that where a new variable Cu is defined by Formula 13 below, the flow rate change amount ΔGr of the upstream expansion valve 5 in Formula 12 can be expressed by Formula 14 below.

Math. 13

$$Cu = 1 + \frac{1}{2}\frac{Su}{dPu}\frac{\Delta dPu}{\Delta Su} + O(\Delta^2) \qquad ...(\text{Formula } 13)$$

Math. 14

$$\Delta Gr = \alpha \times \Delta Su \times \sqrt{dPu} \times Cu \quad \text{...(Formula 14)}$$

Similarly, where a new variable Cd is defined by Formula 15 below, a flow rate change amount ΔGr of the downstream expansion valve 7 can be expressed by Formula 16 below.

Math. 15

$$Cd = 1 + \frac{1}{2}\frac{Sd}{dPd}\frac{\Delta dPd}{\Delta Sd} + O(\Delta^2) \quad \text{...(Formula 15)}$$

Math. 16

$$\Delta Gr = \alpha \times \Delta Sd \times \sqrt{dPd} \times Cd \quad \text{...(Formula 16)}$$

Then, from the above Formulas 13 to 16, the following relationship is established.

Math. 17

$$\Delta Su = \frac{Cd}{Cu}\frac{Su}{Sd}\Delta Sd \quad \text{...(Formula 17)}$$

In Formula 17, Cd/Cu is defined as c, and c(k) in Formula 11 can thus be determined. The values of the variables Cd and Cu may be obtained from a database produced based on a table which is produced from data obtained by, for example, an experiment or a simulation and in which pressure losses at expansion valves and opening degrees of the expansion valves are inputs, or may be obtained through successive estimations that are made using a mathematical model. Alternatively, an average value may be applied as a constant.

As described above, in Embodiment 2, the controller 2 computes a correction amount or a correction change amount of the opening degree of the upstream expansion valve 5 by performing a multiplication with a predetermined coefficient. In addition, the controller 2 determines the coefficient c(k) based on the set value of the opening degree of the upstream expansion valve 5, the set value of the opening degree of the downstream expansion valve 7, and the pressure losses at the upstream expansion valve 5 and the downstream expansion valve 7. As a result, even when changes in the opening degrees of the upstream expansion valve 5 and the downstream expansion valve 7 greatly affect the pressure losses, it is possible to highly precisely control the flow rate of the refrigerant in the receiver 6 by correcting a modeling error, and thus avoid depletion of the liquid refrigerant in the receiver 6.

Embodiment 3

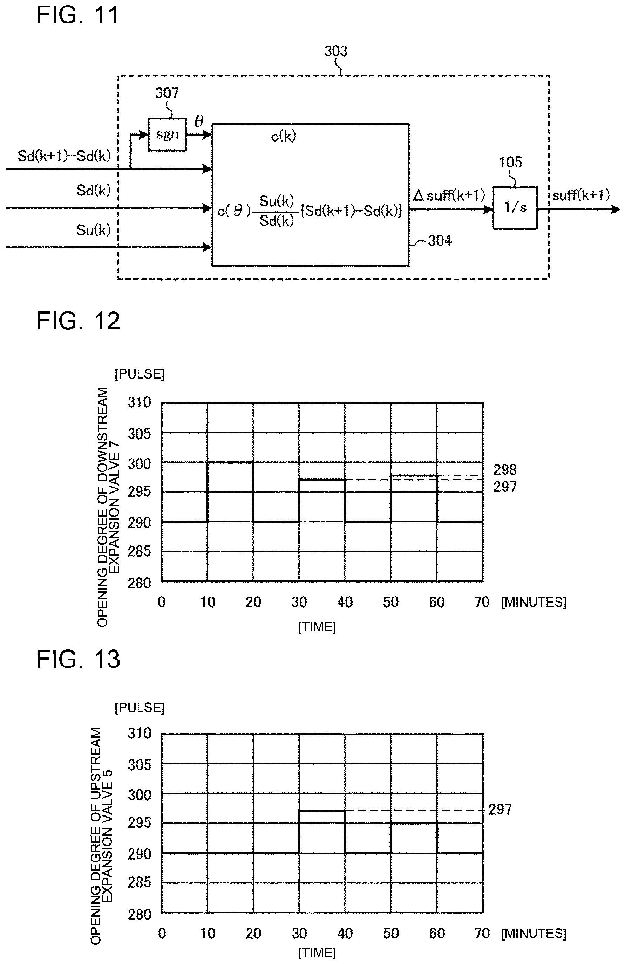

FIG. 11 is a block diagram illustrating an example of the configuration of an opening-degree correction device according to Embodiment 3. An opening-degree correction device 303 of Embodiment 3 further includes a sign function block 307, and a coefficient expressed as a function c(θ) is applied to a multiplication performed in the computation by a refrigerant-amount retention module 304. In this regard, the opening-degree correction device 303 of Embodiment 3 is different from the opening-degree correction device 103 of Embodiment 1 as illustrated in FIG. 4. The other configurations and operations are the same as those of Embodiment 1, and their descriptions will thus be omitted.

The refrigerant-amount retention module 304 of Embodiment 3 computes a correction change amount ΔSuff(k+1) according to the following Formula 18.

Math. 18

$$\Delta Suff(k + 1) = c(\theta)\frac{Su(k)}{Sd(k)}\{Sd(k + 1) - Sd(k)\} \quad \text{...(Formula 18)}$$

A sign function sgn for computing an argument θ of the function c(θ) is defined by the following Formula 19.
Math. 19

$$\theta = sgn(x) = \begin{cases} 1 & if\ x > 0 \\ 0 & if\ x = 0 \\ -1 & if\ x < 0 \end{cases} \ ...(\text{Formula } 19)$$

Furthermore, with θ used as an argument, the function c(θ) is defined as follows.
Math. 20

$$c(\theta) = \begin{cases} c1 & if\ \theta = 1 \\ 0 & if\ \theta = 0 \\ c2 & if\ \theta = -1 \end{cases} \ ...(\text{Formula } 20)$$

It should be noted that c1 and c2 in Formula 20 are constants and are set in such a manner as to satisfy $0 \leq c2 \leq c1$. The constant c1 is a constant for the change in the opening degree of the upstream expansion valve 5 in the case where the opening degree of the downstream expansion valve 7 is increased. The constant c2 is a constant for the change in the opening degree of the upstream expansion valve 5 in the case where the opening degree of the downstream expansion valve 7 is decreased. For example, the opening degree of the upstream expansion valve 5 may be controlled by setting c2<c1 and c2=0 such that the opening degree of the upstream expansion valve 5 is changed when the opening degree of the downstream expansion valve 7 is increased but is not changed when the opening degree of the downstream expansion valve 7 is decreased.

By setting c2<c1, the opening degree correction amount of the upstream expansion valve 5 in the case where the opening degree of the downstream expansion valve is increased is larger than the opening degree correction amount of the upstream expansion valve 5 in the case where the opening degree of the downstream expansion valve is decreased, and thus the amount of the liquid refrigerant in the receiver 6 tends to be increased. As a result, even when a modeling error or a disturbance is large, depletion of the liquid refrigerant in the receiver 6 can be avoided.

Result of Simulations Performed Regarding Refrigeration Cycle Apparatus of Embodiment 1 or 2

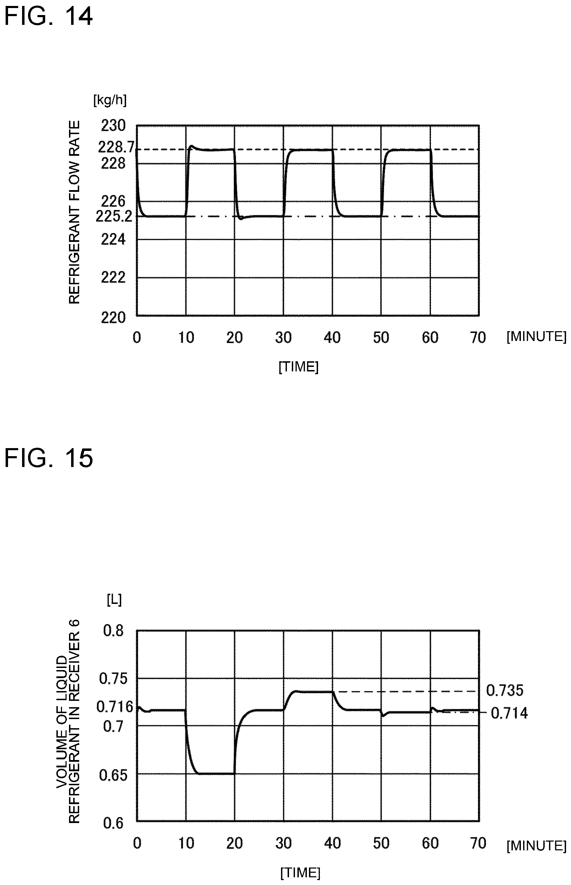

FIG. 12 is a diagram indicating an operation of the downstream expansion valve 7 in a simulation performed regarding the refrigeration cycle apparatus of Embodiment 1 or 2. In FIG. 12, the vertical axis represents the opening degree [pulse] of the downstream expansion valve 7 and the horizontal axis represents time that elapses from the start of the simulation. FIG. 13 is a diagram indicating an operation of the upstream expansion valve 5 in a simulation performed regarding the refrigeration cycle apparatus 1 of Embodiment 1 or 2. In FIG. 13, the vertical axis represents the opening degree [pulse] of the upstream expansion valve 5 and the horizontal axis represents time that elapses from the start of simulation. FIG. 14 is a diagram indicating a change in the refrigerant flow rate in a simulation regarding the refrigeration cycle apparatus of Embodiment 1 or 2. In FIG. 14, the vertical axis represents the refrigerant flow rate Gr in the refrigerant circuit 10 and the horizontal axis represents time that elapses from the start of simulation. FIG. 15 is a diagram indicating a change in the volume of the refrigerant in the receiver in a simulation performed regarding the refrigeration cycle apparatus of Embodiment 1 or 2. In FIG. 15, the vertical axis represents the volume of the liquid refrigerant stored in the receiver 6 and the horizontal axis represents time that elapses from the start of simulation. With reference to Figs. 1 and 12 to 15, results obtained by simulating the volume of the liquid refrigerant stored in the receiver 6 under a specific condition will be described.

Electronic expansion valves were used as the upstream expansion valve 5 and the downstream expansion valve 7, and the reference opening degree (opening degree of the expansion valve at start time) of each of these expansion valves was set at 290 pulses. The refrigerant flow rate Gr of the refrigerant circuit 10 at that time was 225.2 [kg/h], as indicated by a dashed-dotted line in FIG. 14, and the volume of the liquid refrigerant stored in the receiver 6 was 0.716 [L], as indicated in FIG. 15. An output of the second controller 102 is a constant. The first controller 101 is operated to perform a control to cause the refrigerant flow rate to reach a target value (for example, 228.7 [kg/h] indicated by a broken line in FIG. 14).

First, a simulation was performed with respect to the case where the opening degree was not corrected. As indicated in FIG. 12, when 10 minutes elapsed, only the opening degree of the downstream expansion valve 7 was changed from 290 pulses to 300 pulses, thereby causing the refrigerant flow rate Gr to reach the target value. When the refrigerant flow rate Gr reached the target value, the volume of the liquid refrigerant in the receiver was 0.65 [L], as indicated in FIG. 15. Then, as indicated in FIG. 12, when 20 minutes elapsed, an operation point of the downstream expansion valve 7 was returned to the reference point.

Next, in the case where the opening degrees was corrected according to Formula 1, when 30 minutes elapsed, the opening degree of the downstream expansion valve 7 and the opening degree of the upstream expansion valve 5 were changed from 290 pulses to 297 pulses (as indicated by broken lines in Figs. 12 and 13) in conjunction with each other in such a manner as to satisfy the relationship of Formula 1, thereby causing the refrigerant flow rate Gr to reach the target value. When the refrigerant flow rate reached the target value, the volume of the liquid refrigerant in the receiver 6 was 0.735 [L], as indicated by a broken line in FIG. 15. As indicated in FIG. 15, a change amount (0.019 L) of the volume of the liquid refrigerant in the receiver 6 in the case where the opening degrees was corrected according to Formula 1 was smaller than a change amount (0.066 L) of the volume of the liquid refrigerant in the receiver 6 in the case where the opening degrees was not corrected. That is, it can be seen that in the case where the opening degrees were corrected, the function of retaining the refrigerant amount was effectively fulfilled. Then, when 40 minutes elapsed, the operation points of the downstream expansion valve 7 and the upstream expansion valve 5 were returned to the reference points.

Finally, in the case where the opening degrees were corrected according to Formula 11, when 50 minutes elapsed, the opening degree of the downstream expansion valve 7 and the opening degree of the upstream expansion valve 5 were changed in conjunction with each other in such a manner as to satisfy the relationship of Formula 10, thereby causing the refrigerant flow rate to reach the target value. In this case, the coefficient c was 0.625, and the opening degree of the downstream expansion valve 7 was changed from 290 pulses to 298 pulses as indicated by a dashed-dotted line in FIG. 12, and the opening degree of the upstream expansion valve 5 was changed from 290 pulses to 295 pulses as indicated in FIG. 13. When the refrigerant flow rate Gr reached the target value, the volume of the liquid refrigerant in the receiver 6 was 0.714 [L] as indicated by a dashed-dotted line in FIG. 15. As illustrated in FIG. 15, a change amount (0.002 L) of the volume of the liquid refrigerant in the receiver 6 in the case where the opening degrees are corrected according to Formula 11 was far smaller than the change amount (0.019 L) in the case where the opening degrees were corrected according to Formula 1. Thus, the function of retaining the refrigerant amount was further improved.

LIST OF REFERENCE SIGNS

| | |
|---|---|
| 1 | refrigeration cycle apparatus |
| 2 | controller |
| 3 | compressor |
| 4 | condenser |
| 5 | upstream expansion valve |
| 6 | receiver |
| 7 | downstream expansion valve |
| 8 | evaporator |
| 9 | pipe |
| 10 | refrigerant circuit |
| 11 | discharge temperature sensor |
| 12 | outlet temperature sensor |
| 13 | high-pressure sensor |
| 14 | low-pressure sensor |
| 21 | control processor |
| 22 | clocking device |
| 23 | storage device |
| 101 | first controller |
| 102 | second controller |
| 103, 203, 303 | opening-degree correction device |
| 104, 204, 304 | refrigerant-amount retention module |
| 105 | integrator |
| 111 | subtractor |
| 112 | adder |
| 206 | coefficient determination module |
| 307 | sign function block |

| Gr | refrigerant flow rate |
| Sd, Su | opening degree |
| Su_tmp | provisional value |
| Suff | correction value |

**Claims**

1. A refrigeration cycle apparatus (1) including a refrigerant circuit (10) in which a compressor (3) configured to compress refrigerant, a condenser (4), a receiver (6) configured to store the refrigerant, and an evaporator (8) are connected by pipes (9), the refrigeration cycle apparatus (1) comprising:

   an upstream expansion valve (5) whose opening degree is variable and which is provided between the condenser (4) and the receiver (6) in the refrigerant circuit (10);
   a downstream expansion valve (7) whose opening degree is variable and which is provided between the receiver (6) and the evaporator (8) in the refrigerant circuit (10); and
   a controller (2) configured to control the opening degree of the upstream expansion valve (5) and the opening degree of the downstream expansion valve (7),
   **characterized in that** the controller (2) is configured to compute the opening degree of the downstream expansion valve (7) and a provisional opening degree of the upstream expansion valve (5), compute a correction value for the opening degree of the upstream expansion valve (5) based on at least a difference between the computed opening degree of the downstream expansion valve (7) and an opening degree thereof that is being set, and
   perform a control to set the opening degree of the downstream expansion valve (7) to the computed opening degree of the downstream expansion valve (7) and to set the opening degree of the upstream expansion valve (5) to an opening degree obtained by correcting the computed provisional opening degree of the upstream expansion valve (5) by the correction value, in conjunction with the downstream expansion valve (7), and
   wherein the correction value for the opening degree of the upstream expansion valve (5) or a correction change amount of the opening degree of the upstream expansion valve (5), which is a difference between the computed correction value and a previous correction value, is a value having a same sign as the difference between the opening degrees of the downstream expansion valve (7).

2. The refrigeration cycle apparatus (1) of claim 1,

   wherein the controller (2) includes
   a first controller (101) configured to change the opening degree of the downstream expansion valve (7) as a control operation value to perform a control to cause a first control value to reach a first target control value,
   a second controller (102) configured to control the provisional opening degree of the upstream expansion valve (5) as a control operation value to make a control to cause a second control value, which is different from the first control value, to reach a second target control value, and
   an opening-degree correction device (103) configured to compute the correction value for the opening degree of the upstream expansion valve (5) based on at least the difference between the opening degrees of the downstream expansion valve (7), and
   wherein the controller (2) is configured to compute a corrected opening degree of the upstream expansion valve (5) by adding the control operation value for use in the control by the second controller (102) and the correction value computed by the opening-degree correction device (103).

3. The refrigeration cycle apparatus (1) of claim 1 or 2, further comprising:

   a discharge temperature sensor (11) configured to detect a temperature of the refrigerant discharged from the compressor (3);
   a high-pressure sensor (13) configured to detect a pressure of the refrigerant discharged from the compressor (3); and
   an outlet temperature sensor (12) configured to detect a temperature of the refrigerant that flows out of the condenser (4),
   wherein the controller (2) is configured to compute the opening degree of the downstream expansion valve (7) based on the temperature of the refrigerant that is detected by the discharge temperature sensor (11), and
   compute the provisional opening degree of the upstream expansion valve (5) based on a degree of subcooling obtained from the pressure of the refrigerant that is detected by the high-pressure sensor (13) and the temperature of the refrigerant that is detected by the outlet temperature sensor (12).

4. The refrigeration cycle apparatus (1) of any one of claims 1 to 3, wherein the controller (2) is configured to compute the correction value for the opening degree of the upstream expansion valve (5) based on the difference between the opening degrees of the downstream expansion valve (7), a set value of the opening degree of the downstream expansion valve (7), and a set value of the opening degree of the upstream expansion valve (5).

5. The refrigeration cycle apparatus (1) of any one of claims 1 to 4, wherein the correction value for the opening degree of the upstream expansion valve (5) or an absolute value of the correction change amount of the opening degree of the upstream expansion valve (5) increases as the opening degree being set in the upstream expansion valve (5) increases, and decreases as the opening degree being set in the downstream expansion valve (7) increases.

6. The refrigeration cycle apparatus (1) of any one of claims 1 to 5, wherein the correction value for or the correction change amount of the opening degree of the upstream expansion valve (5) has an inversely proportional relationship with the opening degree being set in the downstream expansion valve (7), has a proportional relationship with the difference between the computed opening degree of the downstream expansion valve (7) and the opening degree being set in the downstream expansion valve (7), and has a proportional relationship with the opening degree being set in the upstream expansion valve (5).

7. The refrigeration cycle apparatus (1) of any one of claims 1 to 6, wherein the controller (2) is configure to compute the correction value for or the correction change amount of the opening degree of the upstream expansion valve (5) by performing a multiplication with a predetermined coefficient.

8. The refrigeration cycle apparatus (1) of claim 7, wherein the controller (2) is configured to determine the coefficient based on the set value of the opening degree of the upstream expansion valve (5), the set value of the opening degree of the downstream expansion valve (7), and pressure losses at the upstream expansion valve (5) and the downstream expansion valve (7).

9. The refrigeration cycle apparatus (1) of claim 7, wherein a value of the coefficient in a case where the difference between the computed opening degree of the downstream expansion valve (7) and the opening degree being set in the downstream expansion valve (7) is positive is greater than or equal to a value of the coefficient in a case where the difference is negative.

10. The refrigeration cycle apparatus (1) of claim 9, wherein the coefficient in a case where the opening degree of the downstream expansion valve (7) is zero.

**Patentansprüche**

1. Kältekreislaufvorrichtung (1), die einen Kältemittelkreislauf (10) beinhaltet, in dem ein Verdichter (3), der dazu konfiguriert ist, Kältemittel zu verdichten, ein Kondensator (4), ein Sammelgefäß (6), das dazu konfiguriert ist, das Kältemittel zu speichern, und ein Verdampfer (8) durch Rohre (9) verbunden sind, wobei die Kältekreislaufvorrichtung (1) Folgendes umfasst:

ein stromaufwärtiges Expansionsventil (5), dessen Öffnungsgrad variabel ist und das zwischen dem Kondensator (4) und dem Sammelgefäß (6) in dem Kältemittelkreislauf (10) bereitgestellt ist;
ein stromabwärtiges Expansionsventil (7), dessen Öffnungsgrad variabel ist und das zwischen dem Sammelgefäß (6) und dem Verdampfer (8) in dem Kältemittelkreislauf (10) bereitgestellt ist; und
eine Steuerung (2), die dazu konfiguriert ist, den Öffnungsgrad des stromaufwärtigen Expansionsventils (5) und den Öffnungsgrad des stromabwärtigen Expansionsventils (7) zu steuern,
**dadurch gekennzeichnet, dass** die Steuerung (2) zu Folgendem konfiguriert ist:

Berechnen des Öffnungsgrads des stromabwärtigen Expansionsventils (7) und eines vorläufigen Öffnungsgrads des stromaufwärtigen Expansionsventils (5),
Berechnen eines Korrekturwerts für den Öffnungsgrad des stromaufwärtigen Expansionsventils (5) basierend auf mindestens einer Differenz zwischen dem berechneten Öffnungsgrad des stromabwärtigen Expansionsventils (7) und einem Öffnungsgrad davon, der eingestellt wird, und

Durchführen einer Steuerung, um den Öffnungsgrad des stromabwärtigen Expansionsventils (7) auf den berechneten Öffnungsgrad des stromabwärtigen Expansionsventils (7) einzustellen und den Öffnungsgrad des stromaufwärtigen Expansionsventils (5) auf einen Öffnungsgrad einzustellen, der durch Korrigieren des berechneten vorläufigen Öffnungsgrads des stromaufwärtigen Expansionsventils (5) um den Korrekturwert in Verbindung mit dem stromabwärtigen Expansionsventil (7) erlangt wird, und

wobei der Korrekturwert für den Öffnungsgrad des stromaufwärtigen Expansionsventils (5) oder ein Korrekturänderungsbetrag des Öffnungsgrads des stromaufwärtigen Expansionsventils (5), der eine Differenz zwischen dem berechneten Korrekturwert und einem vorherigen Korrekturwert ist, ein Wert ist, der ein gleiches Zeichen aufweist wie die Differenz zwischen den Öffnungsgraden des stromabwärtigen Expansionsventils (7).

2. Kältekreislaufvorrichtung (1) nach Anspruch 1,
wobei die Steuerung (2) Folgendes beinhaltet:

eine erste Steuerung (101), die dazu konfiguriert ist, den Öffnungsgrad des stromabwärtigen Expansionsventils (7) als einen Steuerungsvorgangswert zu ändern, um eine Steuerung durchzuführen, um einen ersten Steuerungswert dazu zu veranlassen, einen ersten Zielsteuerungswert zu erreichen,

eine zweite Steuerung (102), die dazu konfiguriert ist, den vorläufigen Öffnungsgrad des stromaufwärtigen Expansionsventils (5) als einen Steuerungsvorgangswert zu steuern, um eine Steuerung zu zeitigen, um einen zweiten Steuerungswert, der sich von dem ersten Steuerungswert unterscheidet, dazu zu veranlassen, einen zweiten Zielsteuerungswert zu erreichen, und

eine Öffnungsgradkorrektureinrichtung (103), die dazu konfiguriert ist, den Korrekturwert für den Öffnungsgrad des stromaufwärtigen Expansionsventils (5) basierend auf mindestens der Differenz zwischen den Öffnungsgraden des stromabwärtigen Expansionsventils (7) zu berechnen, und

wobei die Steuerung (2) dazu konfiguriert ist, einen korrigierten Öffnungsgrad des stromaufwärtigen Expansionsventils (5) durch Addieren des Steuerungsvorgangswerts zum Verwenden bei der Steuerung durch die zweite Steuerung (102) und des Korrekturwerts, der durch die Öffnungsgradkorrektureinrichtung (103) berechnet wird, zu berechnen.

3. Kältekreislaufvorrichtung (1) nach Anspruch 1 oder 2, ferner umfassend:

einen Ablasstemperatursensor (11), der dazu konfiguriert ist, eine Temperatur des Kältemittels, das aus dem Verdichter (3) abgelassen wird, zu erfassen;

einen Hochdrucksensor (13), der dazu konfiguriert ist, einen Druck des Kältemittels, das aus dem Verdichter (3) abgelassen wird, zu erfassen; und

einen Auslasstemperatursensor (12), der dazu konfiguriert ist, eine Temperatur des Kältemittels, das aus dem Kondensator (4) ausströmt, zu erfassen,

wobei die Steuerung (2) dazu konfiguriert ist, den Öffnungsgrad des stromabwärtigen Expansionsventils (7) basierend auf der Temperatur des Kältemittels, die durch den Ablasstemperatursensor (11) erfasst wird, zu berechnen und den vorläufigen Öffnungsgrad des stromaufwärtigen Expansionsventils (5) basierend auf einem Grad an Unterkühlung, der aus dem Druck des Kältemittels, der durch den Hochdrucksensor (13) erfasst wird, und der Temperatur des Kältemittels, die durch den Auslasstemperatursensor (12) erfasst wird, erlangt wird, zu berechnen.

4. Kältekreislaufvorrichtung (1) nach einem der Ansprüche 1 bis 3, wobei die Steuerung (2) dazu konfiguriert ist, den Korrekturwert für den Öffnungsgrad des stromaufwärtigen Expansionsventils (5) basierend auf der Differenz zwischen den Öffnungsgraden des stromabwärtigen Expansionsventils (7), einem eingestellten Wert des Öffnungsgrads des stromabwärtigen Expansionsventils (7) und einem eingestellten Wert des Öffnungsgrads des stromaufwärtigen Expansionsventils (5) zu berechnen.

5. Kältekreislaufvorrichtung (1) nach einem der Ansprüche 1 bis 4, wobei der Korrekturwert für den Öffnungsgrad des stromaufwärtigen Expansionsventils (5) oder ein absoluter Wert des Korrekturänderungsbetrags des Öffnungsgrads des stromaufwärtigen Expansionsventils (5) zunimmt, wenn der Öffnungsgrad, der in dem stromaufwärtigen Expansionsventil (5) eingestellt wird, zunimmt, und abnimmt, wenn der Öffnungsgrad, der in dem stromabwärtigen Expansionsventil (7) eingestellt wird, zunimmt.

6. Kältekreislaufvorrichtung (1) nach einem der Ansprüche 1 bis 5, wobei der Korrekturwert für den oder der Korrekturänderungsbetrag des Öffnungsgrads des stromaufwärtigen Expansionsventils (5) eine umgekehrt proportionale Beziehung zu dem Öffnungsgrad, der in dem stromabwärtigen Expansionsventil (7) eingestellt wird, aufweist, eine proportionale Beziehung zu der Differenz zwischen dem berechneten Öffnungsgrad des stromabwärtigen Expansionsventils (7) und dem Öffnungsgrad, der in dem stromabwärtigen Expansionsventil (7) eingestellt wird, aufweist und eine proportionale Beziehung zu dem Öffnungsgrad, der in dem stromaufwärtigen Expansionsventil (5) eingestellt wird, aufweist.

7. Kältekreislaufvorrichtung (1) nach einem der Ansprüche 1 bis 6, wobei die Steuerung (2) dazu konfiguriert ist, den Korrekturwert für den oder den Korrekturänderungsbetrag des Öffnungsgrads des stromaufwärtigen Expansionsventils (5) durch Durchführen einer Multiplikation mit einem vorbestimmten Koeffizienten zu berechnen.

8. Kältekreislaufvorrichtung (1) nach Anspruch 7, wobei die Steuerung (2) dazu konfiguriert ist, den Koeffizienten basierend auf dem eingestellten Wert des Öffnungsgrads des stromaufwärtigen Expansionsventils (5), dem eingestellten Wert des Öffnungsgrads des stromabwärtigen Expansionsventils (7) und Druckverlusten an dem stromaufwärtigen Expansionsventil (5) und dem stromabwärtigen Expansionsventil (7) zu bestimmen.

9. Kältekreislaufvorrichtung (1) nach Anspruch 7, wobei ein Wert des Koeffizienten in einem Falle, in dem die Differenz zwischen dem berechneten Öffnungsgrad des stromabwärtigen Expansionsventils (7) und dem Öffnungsgrad, der in dem stromabwärtigen Expansionsventil (7) eingestellt wird, positiv ist, größer oder gleich einem Wert des Koeffizienten in einem Falle ist, in dem die Differenz negativ ist.

10. Kältekreislaufvorrichtung (1) nach Anspruch 9, wobei der Koeffizient in einem Falle, in dem der Öffnungsgrad des stromabwärtigen Expansionsventils (7) null ist.

**Revendications**

1. Appareil à cycle frigorifique (1) incluant un circuit de fluide frigorigène (10) dans lequel un compresseur (3) configuré pour comprimer un fluide frigorigène, un condenseur (4), un réservoir (6) configuré pour stocker le fluide frigorigène et un évaporateur (8) sont reliés par des tuyaux (9), l'appareil à cycle frigorifique (1) comprenant :

un détendeur amont (5) dont un degré d'ouverture est variable et qui est prévu entre le condenseur (4) et le réservoir (6) dans le circuit de fluide frigorigène (10) ;
un détendeur aval (7) dont un degré d'ouverture est variable et qui est prévu entre le réservoir (6) et l'évaporateur (8) dans le circuit de fluide frigorigène (10) ; et
un dispositif de commande (2) configuré pour commander le degré d'ouverture du détendeur amont (5) et le degré d'ouverture du détendeur aval (7),
**caractérisé en ce que** le dispositif de commande (2) est configuré pour calculer le degré d'ouverture du détendeur aval (7) et un degré d'ouverture provisoire du détendeur amont (5),
calculer une valeur de correction pour le degré d'ouverture du détendeur amont (5) sur la base d'au moins une différence entre le degré d'ouverture calculé du détendeur aval (7) et un degré d'ouverture de celui-ci qui est en train d'être fixé, et
effectuer une commande pour fixer le degré d'ouverture du détendeur aval (7) au degré d'ouverture calculé du détendeur aval (7) et pour fixer le degré d'ouverture du détendeur amont (5) à un degré d'ouverture obtenu en corrigeant le degré d'ouverture provisoire calculé du détendeur amont (5) par la valeur de correction, en conjonction avec le détendeur aval (7), et
dans lequel la valeur de correction pour le degré d'ouverture du détendeur amont (5) ou une quantité de changement de correction du degré d'ouverture du détendeur amont (5), qui est une différence entre la valeur de correction calculée et une valeur de correction précédente, est une valeur ayant un même signe que la différence entre les degrés d'ouverture du détendeur aval (7).

2. Appareil à cycle frigorifique (1) selon la revendication 1,

dans lequel le dispositif de commande (2) inclut
un premier dispositif de commande (101) configuré pour changer le degré d'ouverture du détendeur aval (7) en tant que valeur d'opération de commande pour effectuer une commande afin d'amener une première valeur de commande à atteindre une première valeur de commande cible,
un second dispositif de commande (102) configuré pour commander le degré d'ouverture provisoire du détendeur amont (5) en tant que valeur d'opération de commande pour effectuer une commande afin d'amener une seconde valeur de commande, qui est différente de la première valeur de commande, à atteindre une seconde valeur de commande cible, et

un dispositif de correction de degré d'ouverture (103) configuré pour calculer la valeur de correction pour le degré d'ouverture du détendeur amont (5) sur la base d'au moins la différence entre les degrés d'ouverture du détendeur aval (7), et

dans lequel le dispositif de commande (2) est configuré pour calculer un degré d'ouverture corrigé du détendeur amont (5) en ajoutant la valeur d'opération de commande à utiliser dans la commande par le second dispositif de commande (102) et la valeur de correction calculée par le dispositif de correction de degré d'ouverture (103).

3. Appareil à cycle frigorifique (1) selon la revendication 1 ou 2, comprenant en outre :

un capteur de température de refoulement (11) configuré pour détecter une température du fluide frigorigène refoulé par le compresseur (3) ;

un capteur haute pression (13) configuré pour détecter une pression du fluide frigorigène refoulé par le compresseur (3) ; et

un capteur de température de sortie (12) configuré pour détecter une température du fluide frigorigène qui s'écoule hors du condenseur (4),

dans lequel le dispositif de commande (2) est configuré pour calculer le degré d'ouverture du détendeur aval (7) sur la base de la température du fluide frigorigène qui est détectée par le capteur de température de refoulement (11), et pour calculer le degré d'ouverture provisoire du détendeur amont (5) sur la base d'un degré de sous-refroidissement obtenu à partir de la pression du fluide frigorigène qui est détectée par le capteur haute pression (13) et de la température du fluide frigorigène qui est détectée par le capteur de température de sortie (12).

4. Appareil à cycle frigorifique (1) selon l'une quelconque des revendications 1 à 3, dans lequel le dispositif de commande (2) est configuré pour calculer la valeur de correction pour le degré d'ouverture du détendeur amont (5) sur la base de la différence entre les degrés d'ouverture du détendeur aval (7), une valeur de consigne du degré d'ouverture du détendeur aval (7), et une valeur de consigne du degré d'ouverture du détendeur amont (5).

5. Appareil à cycle frigorifique (1) selon l'une quelconque des revendications 1 à 4, dans lequel la valeur de correction du degré d'ouverture du détendeur amont (5) ou une valeur absolue de la quantité de changement de correction du degré d'ouverture du détendeur amont (5) augmente à mesure que le degré d'ouverture en train d'être fixé dans le détendeur amont (5) augmente, et diminue à mesure que le degré d'ouverture en train d'être fixé dans le détendeur aval (7) augmente.

6. Appareil à cycle frigorifique (1) selon l'une quelconque des revendications 1 à 5, dans lequel la valeur de correction pour ou la quantité de changement de correction du degré d'ouverture du détendeur amont (5) a une relation inversement proportionnelle avec le degré d'ouverture en train d'être fixé dans le détendeur aval (7), a une relation proportionnelle avec la différence entre le degré d'ouverture calculé du détendeur aval (7) et le degré d'ouverture en train d'être fixé dans le détendeur aval (7), et a une relation proportionnelle avec le degré d'ouverture en train d'être fixé dans le détendeur amont (5).

7. Appareil à cycle frigorifique (1) selon l'une quelconque des revendications 1 à 6, dans lequel le dispositif de commande (2) est configuré pour calculer la valeur de correction pour ou la quantité de changement de correction du degré d'ouverture du détendeur amont (5) en effectuant une multiplication avec un coefficient prédéterminé.

8. Appareil à cycle frigorifique (1) selon la revendication 7, dans lequel le dispositif de commande (2) est configuré pour déterminer le coefficient sur la base de la valeur fixée du degré d'ouverture du détendeur amont (5), de la valeur fixée du degré d'ouverture du détendeur aval (7), et des pertes de pression au niveau du détendeur amont (5) et du détendeur aval (7).

9. Appareil à cycle frigorifique (1) selon la revendication 7, dans lequel une valeur du coefficient dans un cas où la différence entre le degré d'ouverture calculé du détendeur aval (7) et le degré d'ouverture en train d'être fixé dans le détendeur aval (7) est positive est supérieure ou égale à une valeur du coefficient dans un cas où la différence est négative.

10. Appareil à cycle frigorifique (1) selon la revendication 9, dans lequel le coefficient dans un cas où le degré d'ouverture du détendeur aval (7) est nul.

FIG. 1

FIG. 2

FIG. 3

FIG. 4

FIG. 5

FIG. 6

FIG. 7

EP 4 170 265 B1

FIG. 8

FIG. 9

FIG. 10

FIG. 11

FIG. 12

FIG. 13

FIG. 14

FIG. 15

EP 4 170 265 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2068094 A1

- JP 2019148395 A